# EUROPÄISCHE PATENTSCHRIFT

(11) **EP 0 287 824 B1**
(45) Veröffentlichungstag und Bekanntmachung des Hinweises auf die Patenterteilung: **16.06.1993**
(21) Anmeldenummer: 88104607.2
(22) Anmeldetag: 23.03.1988
(51) Int. Cl.: A01K 1/015, A01K 31/00

(54) **Einrichtung für die Haltung von Kleintieren, insbesondere von Mastgeflügel, wie Hähnchen**
Installation for rearing small animals, in particular poultry
Installation pour l'élevage des petits animaux, en particulier des volailles

(30) Priorität: 23.04.1987 DE 3713611; 04.03.1988 DE 3807137
(43) Veröffentlichungstag der Anmeldung: 26.10.1988
(73) Patentinhaber: Nagel, Hans-Joachim, Dr., D-28203 Bremen (DE)
(72) Erfinder: Nagel, Hans-Joachim, Dr., D-28203 Bremen (DE)
(74) Vertreter: Möller, Friedrich, Dipl.-Ing.

(56) Entgegenhaltungen:
- EP-A- 0 051 844
- DE-A- 2 703 968
- US-A- 4 437 433

## Beschreibung

Die Erfindung betrifft eine Einrichtung für die Haltung von Kleintieren, insbesondere Mastgeflügel wie Hähnchen, in einer Stallung mit einem durchgehenden, als Förderer ausgebildeten, gitterartigen Kunststoff-Tragboden aus Längsfäden und Querfäden eines dünnfädigen Netzes, das auf quer zur Förderrichtung desselben angeordneten, mit seitlichen Förderorganen verbundenen Tragprofilen aufliegt, wobei das Netz durch elastische Organe mit den Tragprofilen verbunden ist.

Aus der US-A-4,437,433 ist eine derartige Einrichtung bekannt, bei der ein bahnförmiges Netz als Tragboden für die Tiere dient. Das Netz bedeckt sich quer zur Förderrichtung erstreckende Tragprofile, die im Querschnitt als geschlossene Hohlprofile ausgebildet sind. Zur Verbindung des Netzes mit dem Tragprofil dienen Verbindungsorgane, die druckknopfartig unter Klemmung jeweils zweier Längs- bzw. Querfäden des Netzes in die Tragprofile eingedrückt werden. Dazu ist es erforderlich, daß die Tragprofile in festgelegten Abständen mit Bohrungen versehen sind. Darüber hinaus ist nachteilig, daß keine Abpolsterung für die Tiere im Bereich der Tragprofile gegeben ist.

Der Erfindung liegt daher die Aufgabe zugrunde, die Einrichtung der einleitend genannten Art so zu verbessern, daß eine fertigungstechnisch günstige Verbindung zwischen Netz und Tragprofilen erreicht und eine Belastung der Tiere im Bereich der Tragprofile vermieden wird.

Die Aufgabe wird erfindungsgemäß dadurch gelöst, daß das elastische Organ zum Verbinden des Netzes mit dem Tragprofil als streifenförmiges, elastisch nachgiebiges Polsterprofil ausgebildet ist, das sich in Längsrichtung des Tragprofils oberhalb desselben erstreckt und mit sich ebenfalls in Längsrichtung des Polsterprofils erstreckenden Verankerungsabschnitten im oben offenen Tragprofil verankert ist, wobei die Verankerungsabschnitte im Bereich von Längsfäden des Netzes Ausnehmungen für den Durchtritt der Längsfäden aufweisen.

Erfindungsgemäß erstrecken sich über die gesamte Länge der Tragprofile elastische Polsterprofile, die formschlüssig in den oben offenen Tragprofilen verankert sind. Damit wird in vorteilhafter Weise erreicht, daß die von Tragprofilen verursachte Druckbelastung der Tiere vermieden wird. Ein weiterer Vorteil der erfindungsgemäßen Einrichtung ergibt sich durch die Ausbildung von Ausnehmungen in den Polsterprofilen. Infolge dessen kann das Netz entlang der Förderstrecke durchgängig ausgebildet sein, wobei die entsprechenden Längsfäden des Netzes in den Ausnehmungen angeordnet sind.

Mit der erfindungsgemäßen Einrichtung wird ein merklich besseres Mastergebnis als bei bekannten Einrichtungen vergleichbarer Art erzielt. Die Fleischausbeute ist etwa 7 - 10 % höher. Des weiteren ist das Fleisch merklich zarter.

Die Netzfäden weisen einen Durchmesser von vorzugsweise etwa (1 - 2) mm auf. Die Maschenwiete beträgt vorzugsweise etwa (10 - 13) mm^{x} (13 - 17) mm, insbesondere 12 mm^{x} 15 mm. Bei den durchgeführten Vergleichsversuchen wurden die Netzbahnen in Abständen von jeweils 9 cm durch quergerichtete Tragprofile abgestützt. Dementsprechend sind die den Tragprofilen zugeordneten Polster in Förderrichtung voneinander beabstandet. Die Polster sind vorzugsweise in Form von durchgehenden weichen Schläuchen ausgebildet. Diese ermöglichen die Haltung der Tiere ohne Bildung von Brustblasen. Der Durchmesser der "Polsterschläuche" beträgt etwa (10 - 11) mm; die Wandstärke etwa (1 - 2) mm, vorzugsweise etwa 1,5 mm. An den Enden sind die "Polsterschläuche" geschossen, z.B durch Plattdrücken, Verkleben, Verschweißen oder dergleichen.

Eine andere Ausgestaltung der Erfindung ist in dem Anspruch 14 an gegeben. Nachstehend werden Ausführungsbeispiele der erfindungsgemäßen Einrichtung anhand der beigefügten Zeichnungen näher erläutert. Es zeigen:
- Fig. 1: eine Querschnitt durch einen im Sinne der Erfindung ausgebildeten Stall, stark vereinfacht,
- Fig. 2: einen Ausschnitt des Stalls bzw. eines Tragbodens entsprechend der Darstellung in Fig. 1 in vergrößertem Maßstab,
- Fig. 3: die Abstützung des Tragbodens im Schnitt und noch weiter vergrößertem Maßstab,
- Fig. 4: einen Teil der Tragboden-Abstützung im Schnitt längs Linie IV-IV in Fig. 3 und demgegenüber vergrößertem Maßstab,
- Fig. 5: die Lagerung der Netzboden-Umlenktrommeln im Antriebsbereich und Vertikalschnitt,
- Fig. 6: die Lagerung gemäß Fig. 5 im Horizontalschnitt,
- Fig. 7: die Lagerung gemäß den Fig. 5 und 6 in Seitenansicht,
- Fig. 8: die Lagerung der Netzboden-Umlenktrommeln an der der Antriebsseite gegenüberliegenden Seite im Horizontalschnitt unter Darstellung einer parallel zur Förderrichtung wirksamen Spannvorrichtung,
- Fig. 9: die Lagerung nach Fig. 8 in Seitenansicht,
- Fig. 10: einen Teil des Tragbodennetzes in Draufsicht,
- Fig. 11: einen Teil des Tragbodennetzes in vergrößertem Maßstab unter Darstellung der Verbindung zwischen Netz, Tragprofil und Tragprofil-Polster im Schnitt,
- Fig. 12: das im Rahmen der Anordnung nach Fig. 11 verwendete Tragprofil im Schnitt,
- Fig. 13: einen Teil des Tragbodennetzes in Darstellung entsprechend Fig. 11, jedoch mit abgewandeltem Tragprofil und Tragprofil-Polster,
- Fig. 14: das Tragprofil nach Fig. 13 im Schnitt,
- Fig. 15: einen Teil des Tragbodennetzes in Darstellung entsprechend Fig. 11 oder 13, jedoch mit noch weiter abgewandeltem Tragprofil und Tragprofil-Polster,
- Fig. 16: das Tragprofil-Polster nach Fig. 15 in Frontansicht,
- Fig 17: eine abgewandelte Ausführungsform einer erfindungsgemäßen Einrichtung in perspektivischer Ansicht,
- Fig. 18: einen Teil der Einrichtung nach Fig. 17 in Draufsicht und vergrößertem Maßstab nach Wegnahme des Tragbodens,
- Fig. 19: einen Teil der Einrichtung nach Fig. 17 und 18, nämlich die Abstützung des Tragbodens im Schnitt und vergrößertem Maßstab, Fig. 20 einen Teil des Tragbodens bei der Einrichtung nach den Fig. 17 bis 19 in Draufsicht,
- Fig. 21: eine noch weiter abgewandelte Ausführungsform einer erfindungsgemäßen Einrichtung mit stationärem Tragboden in perspektivischer Ansicht,
- Fig. 22: die zentrale Abstützung des Tragbodens der Einrichtung nach Fig. 21 im Schnitt und vergrößertem Maßstab,
- Fig. 23: einen Teil der Abstützung gemäß Fig. 22 in Seitenansicht, und
- Fig. 24: die Abdeckung des zentralen Halteprofils für den Tragboden in Seitenansicht und Schnitt sowie in vergrößertem Maßstab.

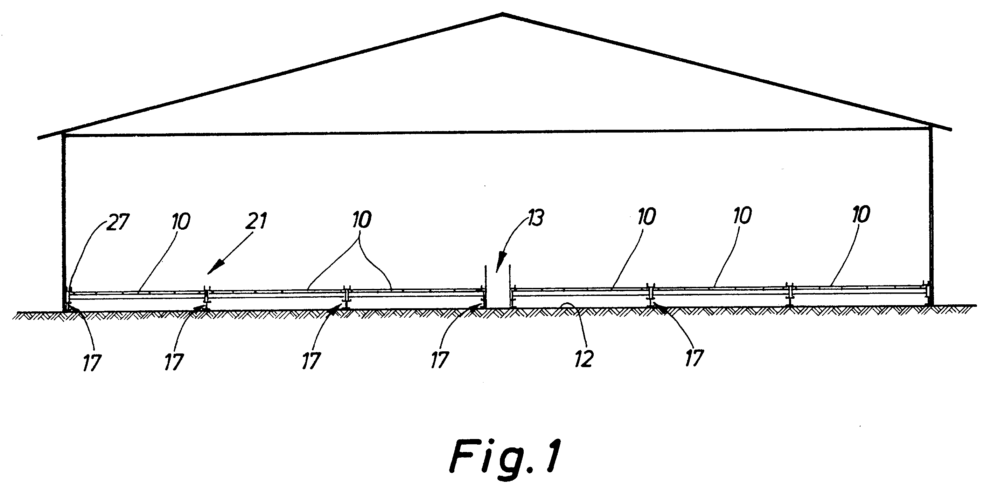

In Fig 1 ist in schematischem Querschnitt eine Stallung zur Aufnahme von beispielsweise Aufzuchthähnchen dargestellt. Innerhalb der Stallung ist oberhalb eines Stallbodens 12 und mit Abstand von diesem ein Tragboden 21 angeordnet. Dieser bildet die Lauf- bzw. Standfläche für die Tiere. Oberhalb des Tragbodens 21 ist ein System von nicht dargestellten Rohren für die Versorgung von sich in Förderrichtung erstreckenden Futtertrögen 27 vorgesehen.

Der Tragboden 21 ist insgesamt als Förderer für die Tiere ausgebildet und - lediglich durch einen Mittelgang 13 unterbrochen - über die volle Breite der Stallung gesehen bewegbar. Zu diesem Zweck ist der Tragboden 21 in einzelne Bahnen unterteilt, die jeweils aus einem durchgehenden, verhältnismäßig dünnfädigen Netz 10 gebildet sind. Diese werden zweckmäßigerweise gemeinsam und gleichzeitig in Förderrichtung bewegt.

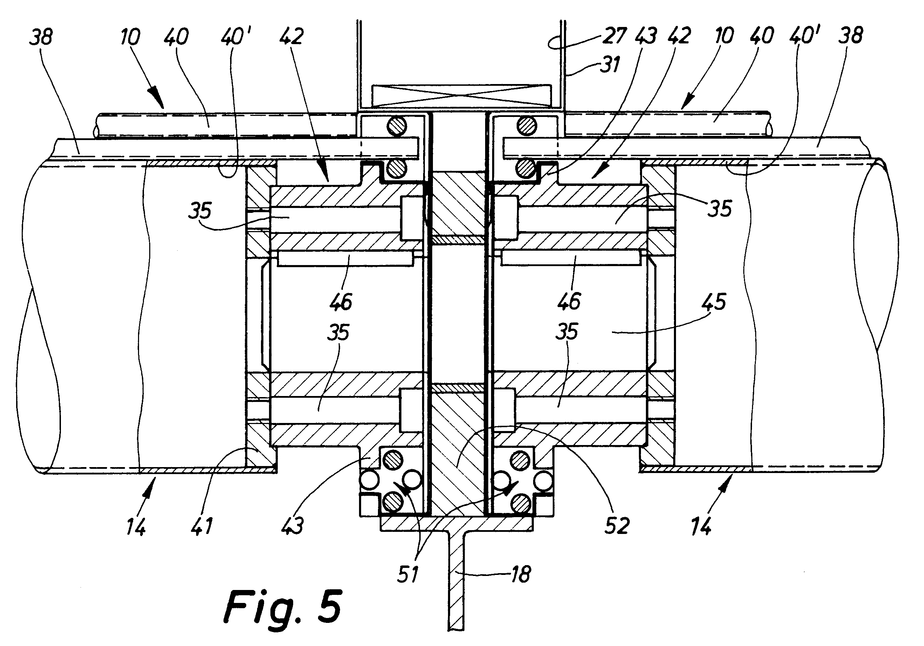

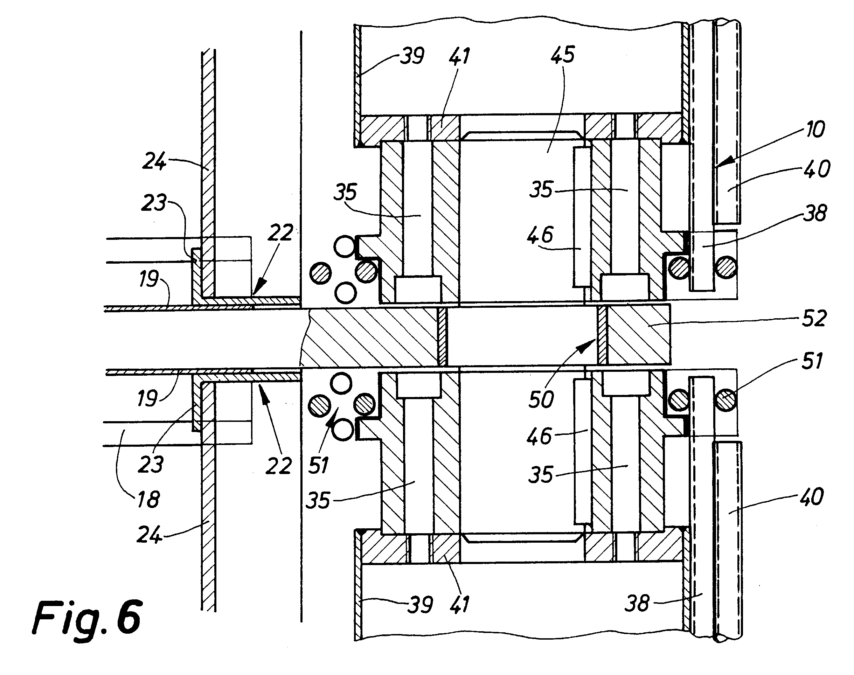

Die Netzbahnen 10 laufen an den Enden über Umlenktrommeln 14 (siehe Fig. 5 bis 9), wobei an einer Seite die Umlenktrommeln 14 mit einem nicht näher dargestellten Antrieb verbunden sind, wobei im vorliegenden Fall der Antrieb vorzugsweise im Bereich des Mittelgangs 13 angeordnet ist.

Wie dargelegt, besteht der Tragboden 21 aus mehreren nebeneinander angeordneten Netzbahnen 10, die jeweils aus armierten Fäden aus relativ weichem bzw. elastisch nachgiebigem Kunststoff, inbesondere Polyamid, hergestellt sind, wobei die Armierung durch eine hochbelastbare Seele, z.B. einen Textil- oder Metalldraht, gebildet ist. Der Durchmesser der Netzfäden beträgt etwa 1 - 2 mm, vorzugsweise nur etwa 1 mm. Die Maschenweite liegt im eingangs genannten Bereich und beträgt vorzugsweise 12 mm x 15 mm.

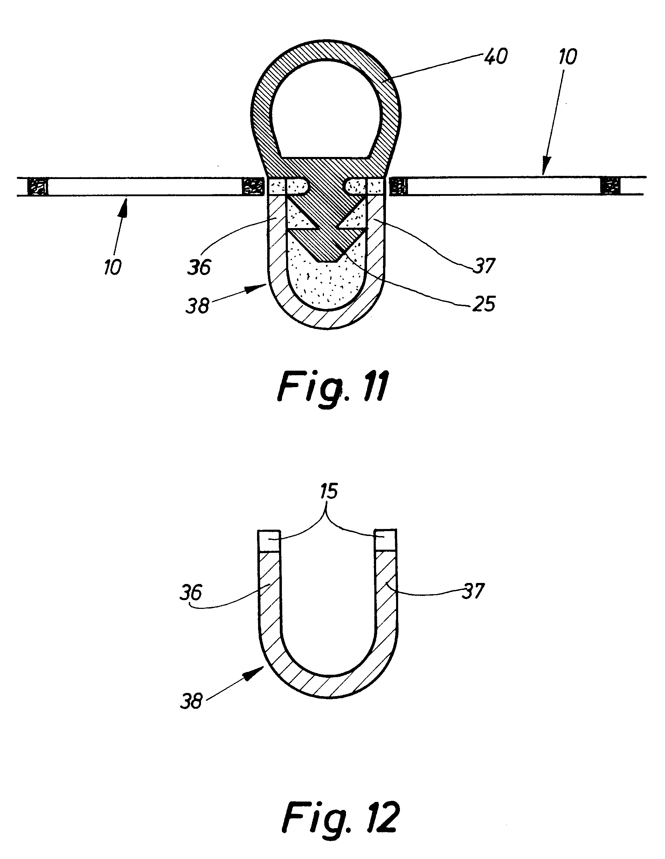

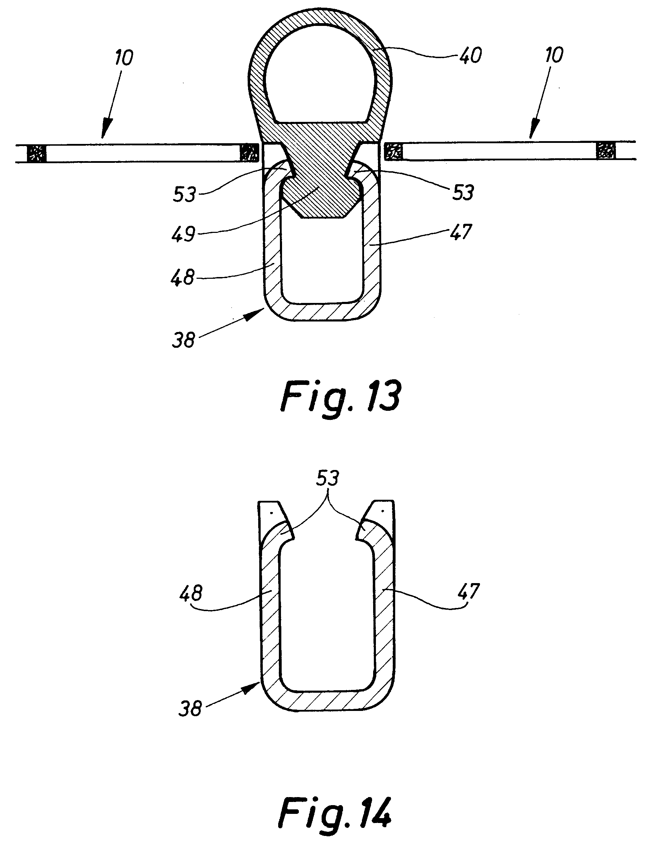

Die so ausgebildete Netzbahn ist über quergerichtete Tragprofile 38 unter gleichzeitiger Anbindung an diese hinweggeführt. Die Verbindung zwischen der Netzbahn bzw. dem Tragbodennetz 10 und Tragprofil 38 erfolgt durch form- und/kraftschlüssige Fixierung des Netzes 10 zwischen dem Tragprofil 38 und einem diesem zugeordneten Polster, welches an der Oberseite des durch das Netz 10 definierten Tragbodens 21 jeweils oberhalb des zugeordneten Tragprofils 38 angeordnet ist. Das Polster wird im vorliegenden Fall durch ein rohr- bzw. schlauchförmiges Hohlprofil 40 (siehe Fig. 11 oder 13) gebildet.

Entsprechend der Ausführungsform nach den Fig. 11 und 12 sind die Tragprofile 38 jeweils nach oben offene U-Profile aus Kunststoff, Metall, insbesondere Edelstahl, oder dergleichen, zwischen deren Schenkel 36 und 37 die jedem Tragprofil zugeordneten Polster, hier Hohlprofil 40, verankert sind, und zwar unter gleichzeitiger Fixierung des Tragbodennetzes 10 zwischen Tragprofil 38 und Polster, nämlich Hohlprofil 40. Zur integralen Verankerung des Netzes 10 zwischen Tragprofil 38 und Polster bzw. Hohlprofil 40 weisen die oberen Ränder der U-Profilschenkel 36, 37 ebenso wie die zwischen diesen verankerbaren Polster Einschnitte auf, durch die sich im montierten Zustand die Längsfäden des Tragbodennetzes 10 hindurch erstrecken. In Fig. 12 sind die an den oberen Rändern der U-Profilschenkel 36, 37 vorgesehen Einschnitte mit der Bezugsziffer 15 gekennzeichnet. Die mit diesen korrespondierenden Polster-Einschnitte sind nach unten offen und im Verankerungsbereich 25 der Polster angeordnet. Der Abstand der erwähnten Einschnitte entspricht dem Abstand der Längsfäden des Tragbodennetzes 10. Die Einschnittbreite beträgt jeweils etwa 2 mm, so daß die Längsfäden des Tragbodennetzes 10 problemlos innerhalb der nach oben offenen Einschnitte 15 an den oberen Rändern der U-Profilschenkel 36, 37 und innerhalb der nach unten offenen Einschnitte im Bereich des Verankerungsteils 25 der Tragprofil-Polster plaziert werden können. Im montierten Zustand fluchten die Randeinschnitte der Tragprofile 38 und nach unten offenen Einschnitte im Verankerungsbereich 25 der Tragprofil-Polster in Förderrichtung bzw. in Richtung der Netz-Längsfäden miteinander.

Wie oben bereits dargelegt, umfassen die Tragprofil-Polster ein rohr- bzw. schlauchförmiges Hohlprofil 40, das sich über der Oberseite des Netzes 10 erstreckt, und zwar durchgehend quer über die Netzbahn. Der mittlere Außendurchmesser des Hohlprofils 40 beträgt etwa 10 - 11 mm. Die Wandstärke beträgt etwa 1,5 mm. Das Hohlprofil 40 besteht vorzugsweise aus Silikonkautschuk mit einer Shore-Härte von 60 Grad. An der Unterseite des Hohlprofils 40 ist ein im Querschnitt widerhakenartiger Verankerungensbereich bzw. -abschnitt 25 angeformt. Dieser wird bei der Montage in den Bereich zwischen die beiden Schenkel 36, 37 des als U-Profil ausgebildeten Tragprofils 38 gebracht, wobei der Bereich zwischen den beiden Schenkeln 36 und 37 vorher mit einem Silikonkleber ausgefüllt ist. Nach entsprechender Aushärtung des Klebers erhält man eine innige und dauerhafte Verbindung zwischen den beschriebenen Tragprofilen 38 einerseits und Tragprofil-Polstern 40 andererseits unter Fixierung des Tragbodennetzes 10 zwischen Tragprofil 38 und Polster 40. Das Tragbodennetz 10 durchsetzt die Einheit Tragprofil 38 und zugeordnetes Tragprofil-Polster 40. An den stirnseitigen Enden ist das schlauchförmige Polster 40 geschlossen, zum Beispiel durch Plattdrücken, Verkleben, Verschweißen oder dergleichen.

Die Tragbodennetze bzw. Netzbahnen 10 sind mit seitlichen Förderorganen in Form von Gliederketten 51 wirkverbunden. Die Wirkverbindung wird dadurch erhalten, daß die freien Enden der Tragprofile 38 in die aufrechten Kettenglieder der zu beiden Seiten jeder Netzbahn 10 angeordneten Gliederketten eingesteckt und durch einen Splint oder dergleichen verankert werden. Bei dieser Art von Wirkverbindung zwischen Tragbodennetz bzw. Netzbahn 10 einerseits und Gliederketten 51 andererseits handelt es sich wohl um die einfachste Konstruktion.

Das Obertrum der Netzbahnen 10 wird durch mindestens zwei längsrandseitig angeordnete Führungsprofile, hier Flacheisen 16, unterstützt, die an ihren Stoßstellen einander überlappen. Auf diesen gleiten die Tragprofile 38 beim Transport der Bahn bzw. des Tragbodennetzes 10 entlang. Die Oberseite der Flacheisen 16 kann zur Verminderung der Gleitreibung und zur Geräuschminderung mit einem Kunststoffbelag versehen sein, der vorzugsweise auswechselbar ist.

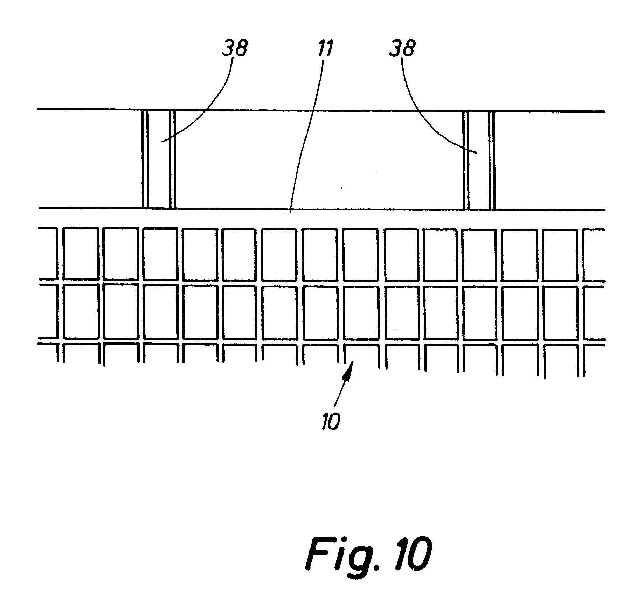

Die aneinanderzuschließenden Enden des Tragbodennetzes 10 sind jeweils mit einer Webkante 11 versehen (siehe Fig. 10), an denen die Stoßverbindung unter Entstehung einer endlosen Netzbahn ausgebildet wird.

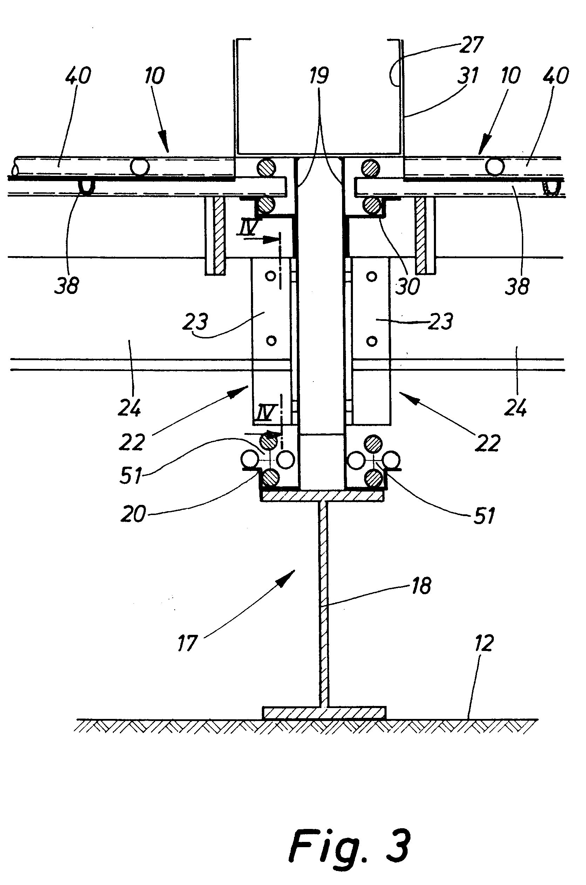

Von besonderem Interesse ist noch die Abstützung des Tragbodens 21 oberhalb des Stallbodens 12. Zu diesem Zweck sind jeweils zu beiden Seiten einer Netzbahn 10 sich in Förderrichtung erstreckende Traggerüste 17 vorgesehen. Die Traggerüste 17 sind entsprechend Fig. 3 jeweils gebildet durch einen Doppel-T-Träger 18, auf den zwei aufrechte Blechwände 19 aufgesetzt, zum Beispiel aufgeschraubt, sind, deren untere Längsränder als seitliche Kettenführungsprofile 20 ausgebildet sind und an deren oberen, jeweils stumpf auslaufenden Längsrändern eine Halterung 31 für einen sich in Förderrichtung erstreckenden Futtertrog 27 angeschlossen, insbesondere angeschweißt, ist. Der Doppel-T-Träger 18 liegt, sich in Förderrichtung erstreckend, mit seinem einen Quersteg auf dem Stallboden 12 und ist mit diesem vorzugsweise schraubverbunden. Die beiden aufrechten Blechwände 19 sind am oberen Quersteg des Doppel-T-Trägers 18 befestigt, vorzugsweise ebenfalls mittels Schrauben. Die unteren Kettenführungsprofile 20 sind so ausgebildet, daß sie sowohl die aufrechten als auch die sich quer dazu erstreckenden Kettenglieder der Gliederketten 51 abstützen, und zwar nach unten und zur Seite hin. Zur entsprechenden Abstützung des Obertrums der Gliederketten 51 sind an den Blechwänden 19 oben seitlich ebenfalls Kettenführungsprofile 30 angeordnet, nämlich angeschraubt. Die Kettenführungsprofile 30 sind als sogenannte Schürungs- bzw. Doppelwinkel-Profile ausgebildet.

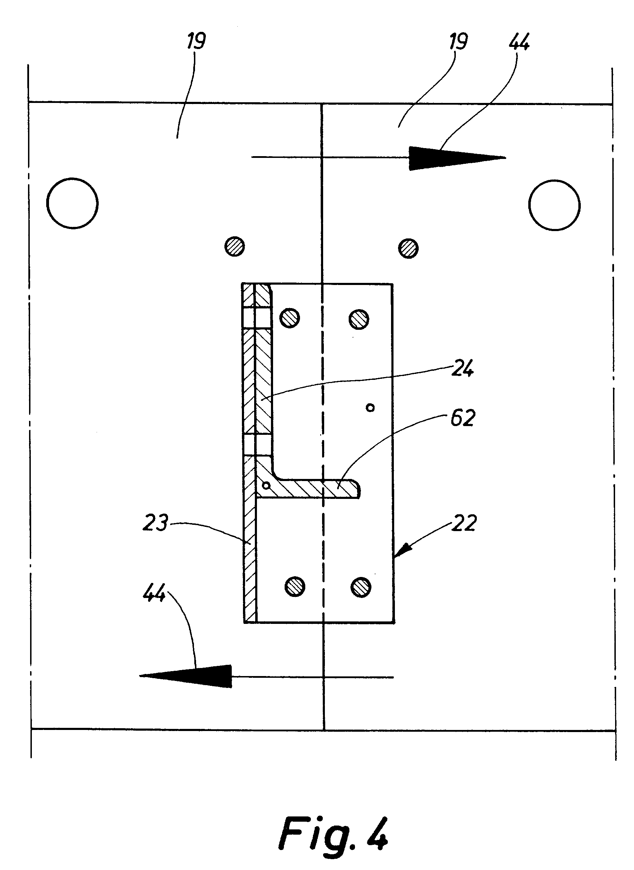

Die Blechwände 19 eines jeden Traggerüsts 17 weisen jeweils eine Länge auf, die geringer ist als die Gesamtlänge des Tragbodens 21. Die so ausgebildeten Blechwände sind stumpf aneinander angeschlossen, wobei die Verbindung durch sich aufrecht erstreckende L-Winkel 22 erfolgt (siehe Fig. 3 und 4), an deren seitlich nach innen abstehenden Schenkeln 23 Querträger 24 angeschlossen sind, die eine Querversteifung benachbarter Traggerüste 17 bewirken. Auf diese Weise erhält man einen äußerst stabilen bzw. steifen Tragrahmen für den Tragboden 21. Die oberen Kettenführungsprofile 30 erstrecken sich zwischen den Querträgern 24 und der Halterung 31 für den Futtertrog 27, und zwar vorzugsweise jeweils so knapp unterhalb der erwähnten Halterung 31, daß die (aufrechten) Kettenglieder zwängungsfrei zwischen dem Kettenführungsprofil 30 und der Halterung 31 für den Futtertrog 27 bewegbar sind (siehe Fig. 3).

Die Verbindungs-Winkel 22 sind mit den stumpf aneinanderstoßenden Blechwänden 19 verschraubt, wie Fig. 4 erkennen läßt. Die zur Queraussteifung dienenden Querträger 24 sind an den seitlich nach innen abstehenden Schenkeln 23 der L-Winkel 22 ebenfalls angeschraubt (siehe auch dazu Fig. 4).

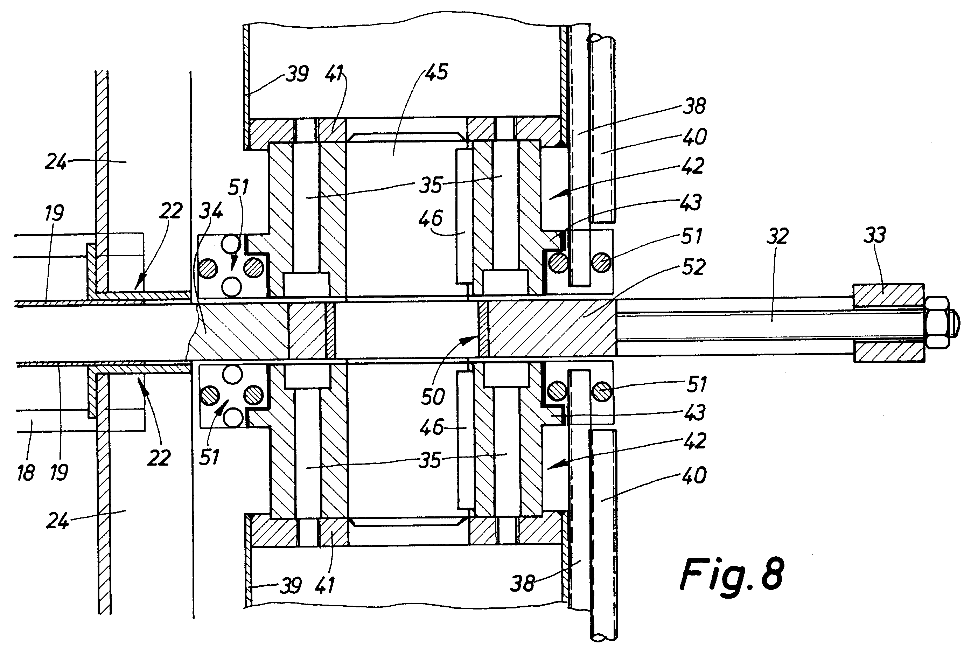

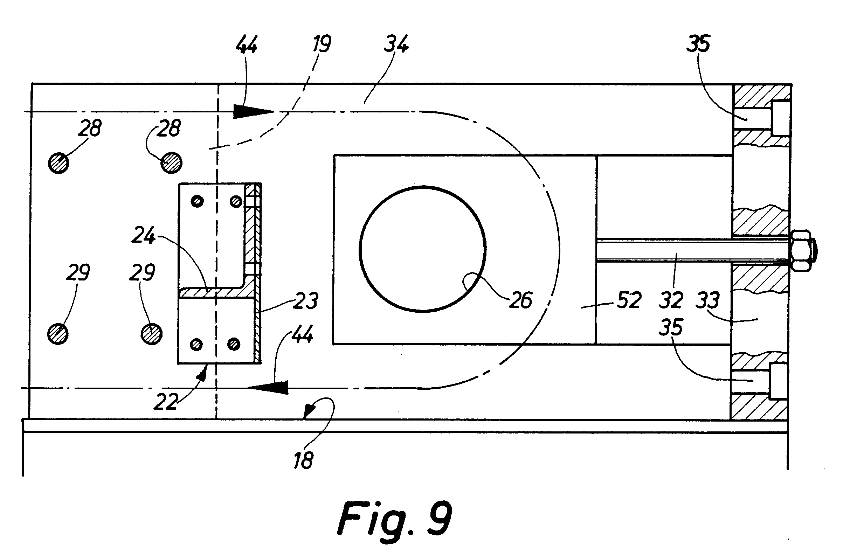

An den Enden des Tragbodens 21 sind Lagerung und Antrieb für die Tragbodennetze 10 bzw. die diesen zugeordneten Gliederketten 51 angeordnet. Die Tragbodennetze bzw. Netzbahnen 10 sind samt Tragprofilen 38, deren Abstand in Förderrichtung vorzugsweise etwa 9 cm beträgt, tragbodenendseitig über Umlenktrommeln 14 geführt, die stirnseitig jeweils Kettenräder 42 zur Umlenkung der den Tragbodennetzen bzw. Netzbahnen 10 zugeordneten Gliederketten 51 aufweisen. Die Lagerung der Umlenktrommeln 14 erfolgt an den seitlichen Traggerüsten 17. Die am gleichen Ende des Tragbodens 21 angeordneten Umlenktrommeln 14 benachbarter Tragbodennetze bzw. Netzbahnen 10 sind koaxial zueinander angeordnet und über ein gemeinsames Drehlager 50 abgestützt, welches am gemeinsamen Traggerüst 17 ausgebildet ist (siehe Fig. 5 bis 9). Die Fig. 5 bis 6 zeigen die gemeinsame Lagerung von Umlenktrommeln 14 benachbarter Tragbodennetze bzw. Netzbahnen 10 im Antriebsbereich 60, während die Fig. 8 und 9 die entsprechende Lagerung an der der Antriebsseite gegenüberliegenden Seite zeigen, an der zusätzlich eine Netz-Spannvorrichtung vorsehen ist. Entsprechende Teile dieser beiden Lagerungen sind zur Vereinfachung der Darstellung mit denselben Bezugsziffern versehen.

Die Umlenktrommeln 14 werden demnach jeweils durch ein Rohr 39 gebildet, die durch Endflansche 41 stirnseitig geschlossen sind. An diesen Endflanschen 41 ist jeweils ein Kettenrad 42 angeschlossen, deren Zähne in die sich parallel zur Netzbahnebene erstreckenden Kettenglieder eingreifen. Im Bereich der Kettenräder 42 erfolgt die seitliche Führung der aufrechten Kettenglieder durch einen am Kettenrad 42 angeordneten Ringvorsprung 43. Die Kettenräder 42 sind an den Endflanschen 41 jeweils durch mehrere gleichmäßig über den Umfang verteilt angeordnete Schraubbolzen 35 angeschlossen.

Wie oben ausgeführt, weisen benachbarte Umlenktrommeln 14 ein gemeinsames Drehlager 50 auf, welches im Bereich des gemeinsamen Traggerüstes 17 angeordnet ist. Das gemeinsame Drehlager 50 ist jeweils durch einen die benachbarten Umlenktrommeln 14 drehfest miteinander verbindenden Lagerbolzen 45 und einen diesem zugeordneten Lagerkörper 52 gebildet. Der Lagerkörper 52 ist im Traggerüst 17 integriert. Die drehfeste Verbindung zwischen den beiden Umlenktrommeln 14 einerseits und dem Lagerbolzen 45 andererseits erfolgt durch Paßfedern 46, die zwischen dem Lager bolzen 45 und den beiden einander zugewandten Kettenrädern 42 angeordnet sind. Diese Ausführungsform erlaubt ein einfaches Aufstecken der Umlenktrommeln 14 auf den gemeinsamen Lagerbolzen 45. Damit ist eine abschnittweise Montage der Einrichtung durch einfaches Aufeinanderstecken und Verschrauben möglich.

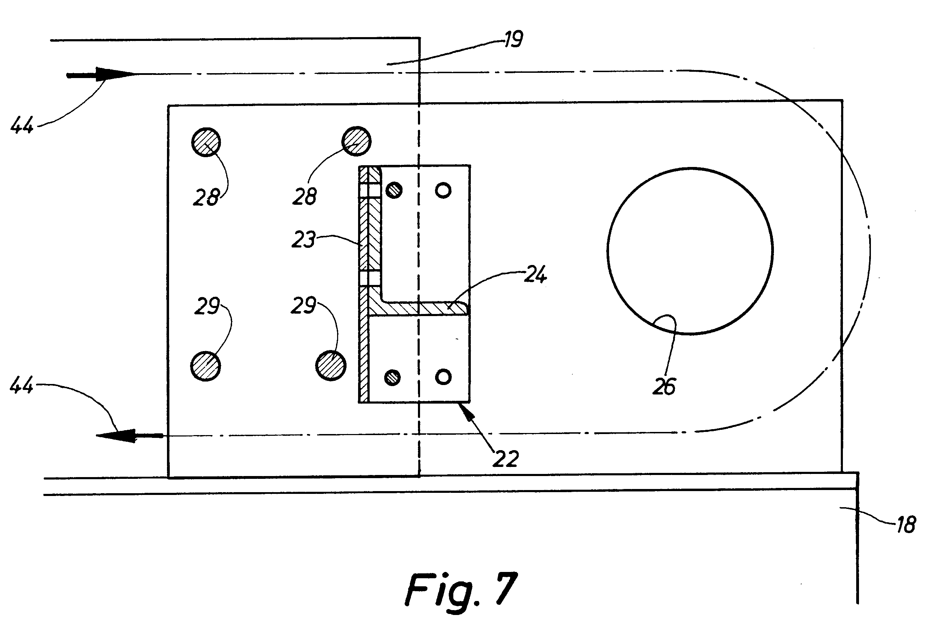

Der Lagerbolzen 45 ist im Lagerkörper 52 gleitgelagert. Selbstverständlich ist auch eine Wälzlagerung möglich. Der Lagerkörper 52 ist bei der dargestellten Ausführungsform eine relativ flache Metallplatte mit einer durchgehenden Bohrung 26, deren Umfangsfläche die Gleitlagerfläche definiert. Diese Lagerplatte ist mittels Schraubbolzen 28, 29 am Traggerüst 17 befestigt, und zwar im Bereich zwischen zwei aufrechten Blechwänden 19, wobei die Abstützung nach unten auf dem durchgehenden Doppel-T-Träger 18 erfolgt (siehe Fig. 5 und 7).

Die gemeinsame Lagerung benachbarter Umlenktrommeln 14 an dem der Antriebsseite gegenüberliegenden Ende des Tragbodens 21 ist in den Fig. 8 und 9 schematisch dargestellt. Diese Lagerung unterscheidet sich von der anhand der Fig. 5 bis 7 beschriebenen Lagerung nur dadurch, daß der Lagerkörper 52 in Richtung parallel zur Förderrichtung verstellbar ist unter entsprechender Spannung bzw. Vorspannung des Tragbodennetzes bzw. der Netzbahnen 10.

Zu diesem Zweck ist der Lagerkörper 52 als Gleitstück ausgebildet, welches mit Hilfe einer Spannschraube 32 in Richtung parallel zur Förderrichtung des Tragbodens 21 verstellt werden kann. Die Abstützung der Spannschraube 32 erfolgt am gemeinsamen Traggerüst 17, und zwar über ein Querjoch 33 und eine am Traggerüst 17 befestigte Jochplatte 34, die am Traggerüst 17 in gleicher Weise angeschlossen ist wie der Lagerkörper 52 bei der Ausführungsform nach den Fig. 5 bis 7. Innerhalb der Jochplatte 34 ist der Lagerkörper 52 in Richtung der Spannschraube 32 hin- und herverschiebbar gelagert. Querjoch 33 und Jochplatte 34 sind mittels sich parallel zur Förderrichtung erstreckenden Schraubbolzen 35 miteinder verschraubt. Die Bewegungsrichtung des Tragbodennetzes bzw. der Netzbahn 10 ist in den Fig. 7 und 9 mit den Pfeilen 44 angedeutet. Ebenso ist die Bewegungsrichtung des Tragbodennetzes bzw. der Netzbahn 10 in Fig. 4 und 7 mit den Pfeilen 44 dargestellt.

An den äußeren Seitenrändern des Tragbodens 21 ist die Lagerung der Umlenktrommeln 14 entsprechend der beschriebenen Lagerung ausgebildet, und zwar als Einfach- und nicht als Doppel-Lager, wie anhand der Fig. 5 bis 9 dargestellt.

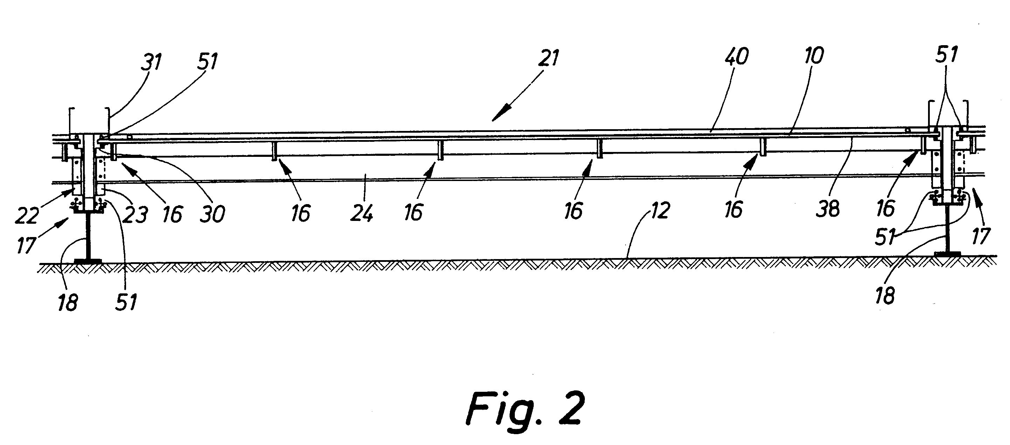

Bei einem Teilkreisdurchmesser der an den Umlenktrommeln 14 angeschlossenen Kettenräder 42 von etwa 140 - 150 mm weisen die Kettenräder 42 jeweils etwa fünf Zähne auf. Der Außendurchmesser der Umlenktrommeln 14 beträgt bei der erwähnten Dimensionierung der Kettenräder 42 etwa 135 mm. Die Breite der Tragbodennetze 10 beträgt dann etwa 2 m. Die Abstützung des Obertrums eines derartig breiten Netzbodens erfolgt durch sechs im gleichen Abstand voneinder angeordnete Flacheisen 16 der beschriebenen Art (siehe Fig. 2).

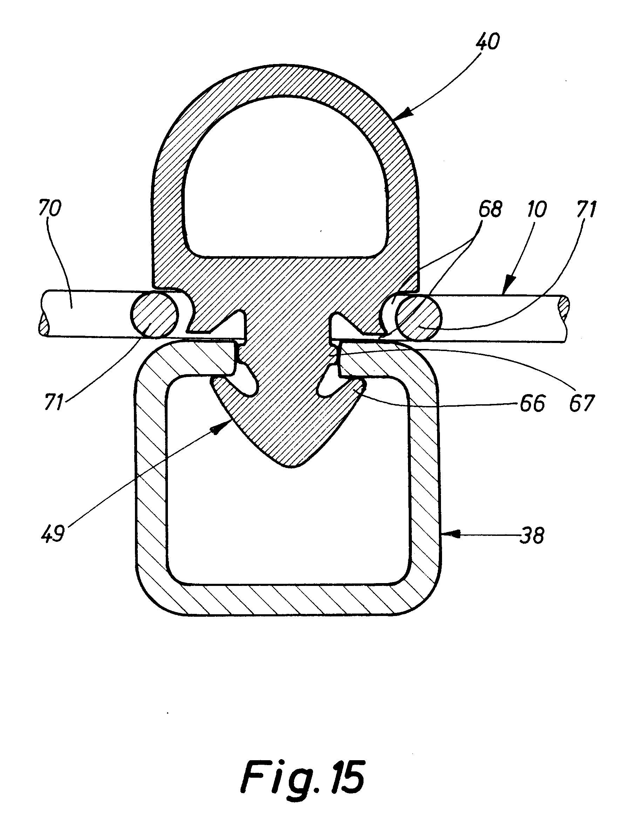

Gegenüber der Ausführungsform des Tragprofils 38 nach den Fig. 11 und 12 ist das Tragprofil nach den Fig. 13 und 14 geringfügig abgewandelt. Statt der Verbindung des oberseitigen Polsterprofils 40 durch Klebung ist bei der Ausführungsform nach den Fig. 13 und 14 eine formschlüssige Schnappverbindung zwischen dem Tragprofil 38 einerseits und einem an der Unterseite des Hohlkörperprofils 40 angeformten Verankerungsabschnitt 49 andererseits vorgesehen. Das im Querschnitt U-förmig ausgebildete Tragprofil 38 ist in Abständen mit nach innen eingeformten Nasen bzw. Vorsprüngen 53 versehen, die im montierten Zustand den taillierten Verankerungsabschnitt 49 klemmend hintergreifen. Eine Klebeverbindung kann bei dieser Ausführungsform entfallen.

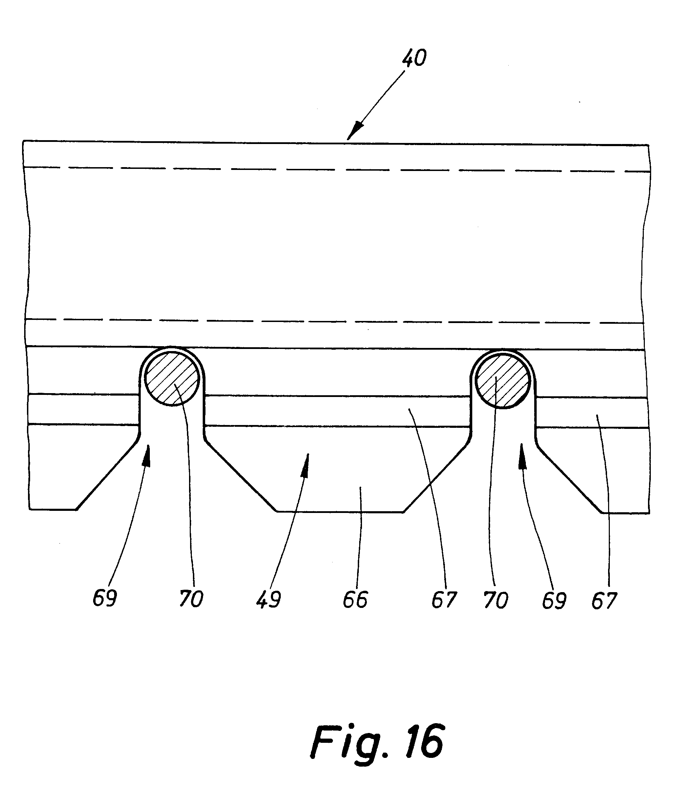

Bei der Ausführungsform nach den Fig. 15 und 16 sind die Tragprofile 38 als C-Profile ausgebildet. Ähnlich wie bei der Ausführungsform nach den Fig. 13 und 14 ist eine formschlüssige Schnappverbindung zwischen dem Tragprofil 38 einerseits und einem an der Unterseite des Hohlkörperprofils 40 angeformten Verankerungsabschnitt 49 andererseits vorgesehen. Dieser umfaßt diametral zur Längsmittenebene angeformte Stützlippen 66, die im montierten Zustand innenseitig an den beiden Schenkeln des C-förmigen Tragprofils 38 anliegen unter klemmender Fixierung des Hohlkörperprofils 40 am Tragprofil 38. Im Bereich des Durchtrittsschlitzes zwischen den beiden Schenkeln des C-förmigen Tragprofils 38 sind am Verankerungsabschnitt 49 des Hohlkörperprofils 40 diametral zu dessen Längsmittenebene Dichtungslippen 67 angeformt. Durch die in Fig. 15 mit der Bezugsziffer 68 gekennzeichneten Spalträume können Toleranz-Differenzen im Tragbodennetz 10 ausgeglichen werden. Des weiteren ist dadurch ein Eindrücken des Hohlkörperprofils 40 von oben her in das Tragprofil 38 möglich bis zur Verankerung an diesem.

Entsprechend Fig. 16 ist der Verankerungsabschnitt 49 des Hohlkörperprofils 40 mit im Längsabstand voneinander angeordneten Ausnehmungen 69 versehen, wobei der Abstand der Maschenweite des Tragbodennetzes 10 entspricht. Durch diese Ausnehmungen 69 erstrecken sich im montierten Zustand die Längsfäden 70 des Tragbodennetzes 10 hindurch. Die Querfäden 71 des Tragbodennetzes 10 sind in Fig. 15 dargestellt. Diese sind im Bereich der Tragprofile 15 bzw. Hohlkörperprofile 40 seitlichen Ausnehmungen derselben zugeordnet unter Beachtung des oben erwähnten Spiels 68 zum Toleranzausgleich.

Zu der oben erwähnten Konstruktion der Umlenktrommeln 14 sei noch erwähnt, daß an der Antriebsseite der Lagerkörper 52 vorzugsweise geteilt ausgebildet ist, und zwar mit einer sich etwa aufrechterstreckenden Teilungsebene, wobei die dem Tragboden 21 zugekehrte Hälfte fest mit der Einrichtung verbunden ist, während die nach außen weisende Lagerhälfte durch Schrauben lösbar fixiert ist.

Entsprechend der Ausbildung der Förderketten 51 können die Kettenräder 42 auch als einfache Zahnräder ausgebildet sein.

Vorzugsweise sind die der Antriebsseite gegenüberliegend angeordneten Umlenktrommeln unabhängig voneinander spannbar, indem jeder Umlenktrommel eine gesonderte Spannvorrichtung mit Spannlager zugeordnet ist. In diesem Fall sind die Umlenktrommeln selbstverständlich auch unabhängig voneinander drehgelagert. Auf diese Weise können unterschiedliche Maßtoleranzen der Förderketten ausgeglichen werden.

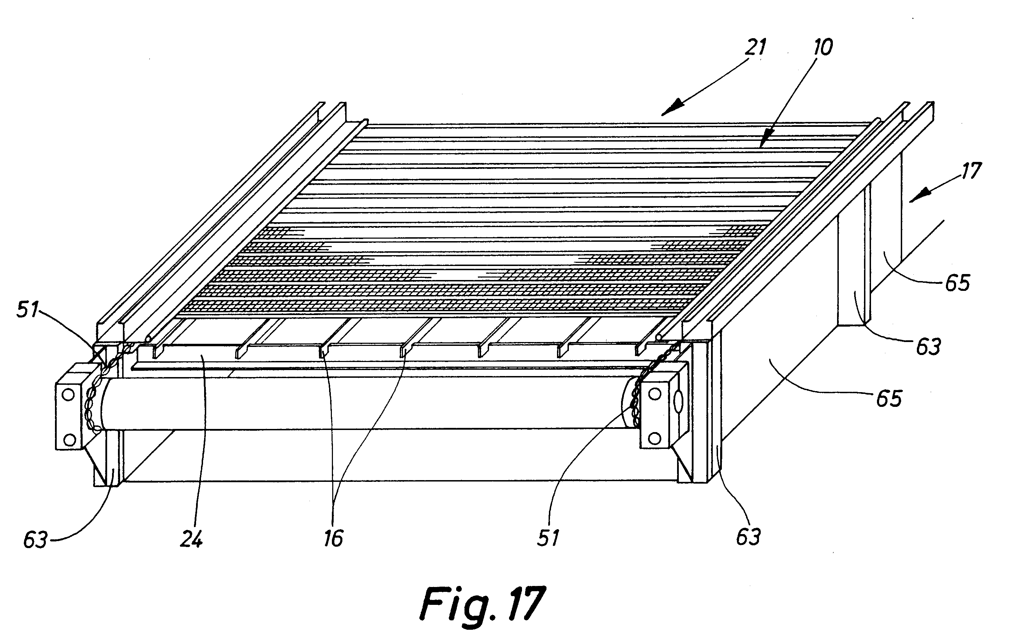

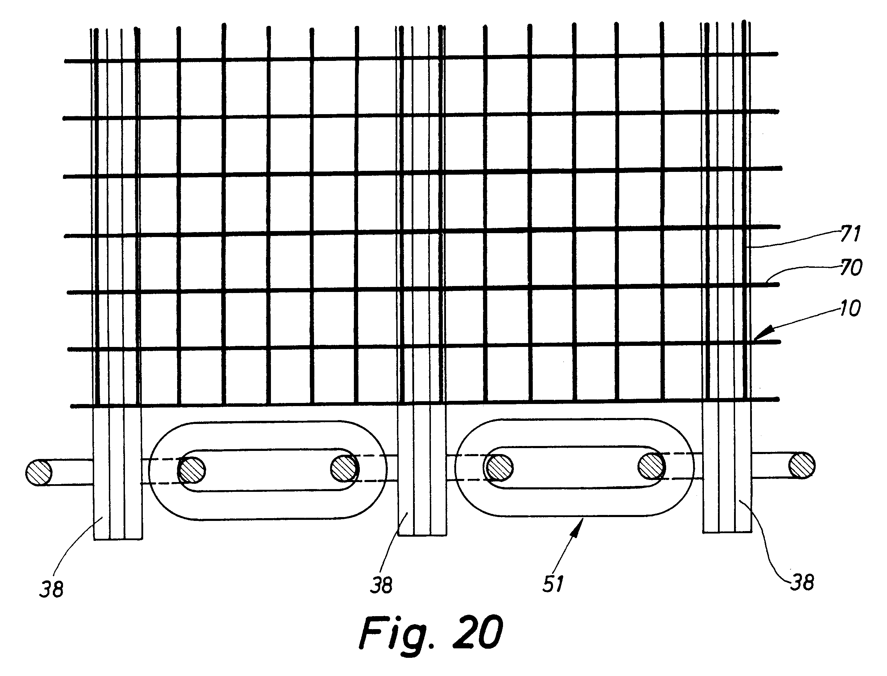

Anhand der Figuren 17 bis 20 soll eine andere Ausführungsform der erfindungsgemäßen Einrichtung näher erläutert werden, wobei bereits anhand der vorherigen Ausführungsform beschriebene und mit denselben Bezugsziffern gekennzeichnete Teile zur Vermeidung von Wiederholungen nicht mehr erläutert werden.

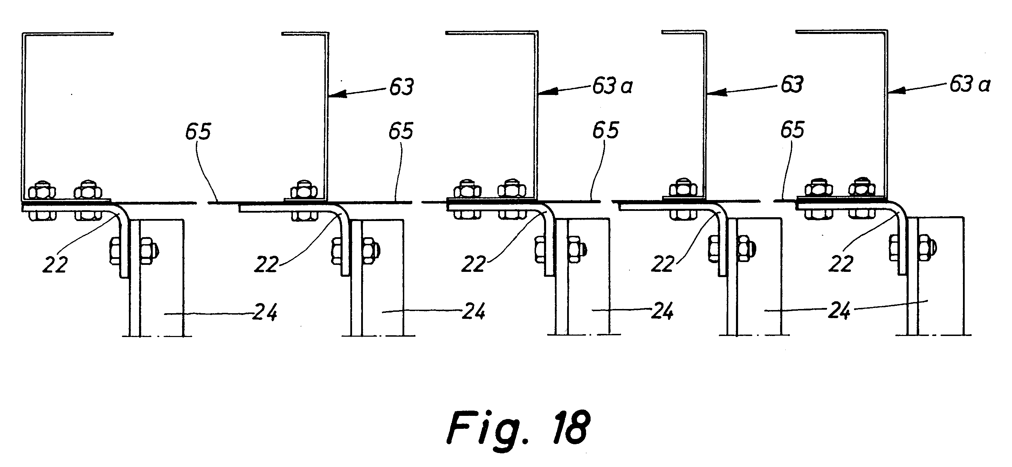

Die Ausführungsform nach den Fig. 17 bis 20 unterscheidet sich von der vorangehend beschriebenen Ausführungsform vornehmlich durch die unterschiedliche Abstützung des Tragbodens 21. Die Abstützung erfolgt durch in Förderrichtung im Abstand voneinander angeordnete aufrechte Stützen 63, 63a, die durch stumpf aneinandergeschlossene Blechwände 65 miteinander verbunden sind ähnlich wie bei der Ausführungsform nach den Figuren 3 und 4, wobei die Querversteifung benachbarter Traggerüste 17 dieser Art ebenfalls durch Querträger 24 erfolgt entsprechend der Darstellung in den Fig. 3 und 4. Auf diese Weise erhält man einen ähnlich stabilen bzw. steifen Tragrahmen für den Tragboden 21 wie bei der vorangehend beschriebenen Ausführungsform. Entsprechend Fig. 18 ist jede zweite Stütze 63a mit breiteren Schenkeln ausgebildet, die zur stumpfen Verbindung der Blechverkleidung 65 dienen.

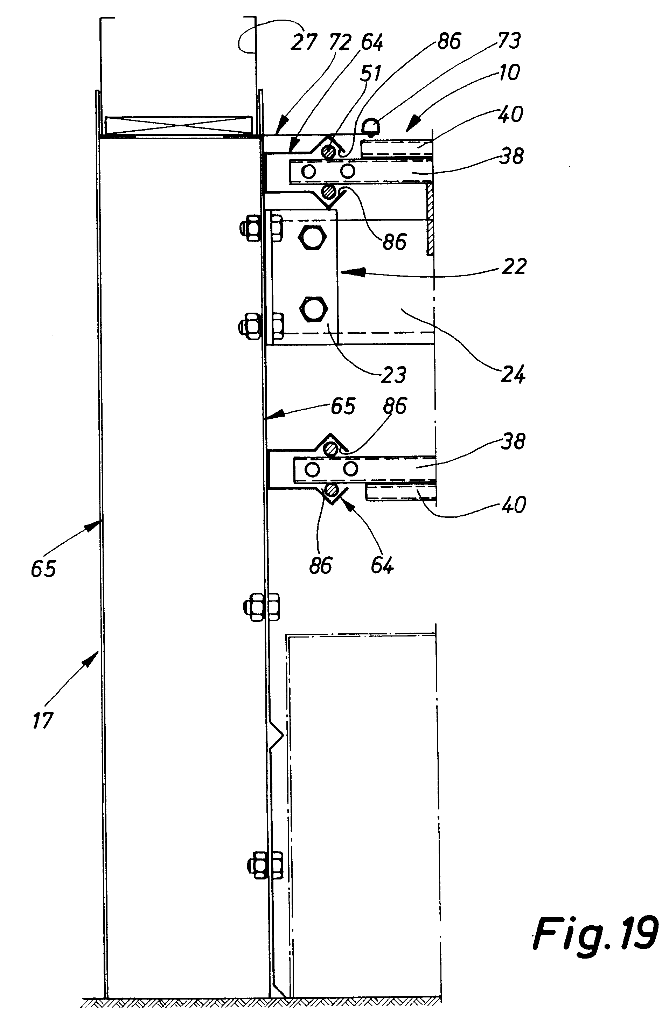

Des weiteren unterscheidet sich die Ausführungsform nach den Fig. 17 bis 20 von der vorangehend beschriebenen Ausführungsform durch die unterschiedlich gestaltete Kettenführung. Wie Fig. 19 sehr gut erkennen läßt, wird sowohl das Obertrum als auch Untertrum der den Tragprofilen 38 zugeordneten Kette 51 innerhalb von U-förmigen Kettenführungsprofilen 64 geführt, die sich in Förderrichtung erstreckend am Traggerüst 17 befestigt, nämlich angeschraubt, sind. Diese Kettenführungsprofile weisen jeweils einander zugewandte Führungsrillen für die jeweils aufrechten Kettenglieder auf, wobei bei der dargestellten Ausführungsform der Querschnitt der Führungsrillen 86 jeweils rechtwinklig ausgebildet ist. In der Praxis weisen die aufrechten Stützen 63, 63a jeweils einen Abstand von etwa 1,2 bis 1,8, insbesondere etwa 1,5 m auf. Die Verbindung zwischen den Tragprofilen 38 und den Förderketten 51 erfolgt in ähnlicher Weise wie bei der vorangehend beschriebenen Ausführungsform.

Es sei noch erwähnt, daß eine bevorzugte Konstruktion der Netzbahn 10 wie folgt ist:
In Schußrichtung: hochfeste Polyestermonofilfäden (sieben Stück mit Fadenabstand 12,86 mm);
in Kettrichtung: hochfeste Polyestermultifil-Fäden (fünf Stück; Fadenabstand 17,55 mm).

Das so ausgebildete Netz wird vorzugsweise durch Eintauchen in eine PVC-Paste mit einer Ummantelung aus Weich-PVC versehen.

An der Oberseite des Traggerüstes 17 bzw. an den oberen Stirnseiten der Tragstützen 63, 63a ist ein sich in Förderrichtung erstreckender Futtertrog 27 befestigt. Dabei ist festgestellt worden, daß dieser Futtertrog aufgrund seiner Gestaltung für Kleinsttiere nach dem Einstallen zu groß bzw. in der Regel zu hoch gebaut ist. Des weiteren sind nicht unbeträchtliche Futterverluste festgestellt worden, weil größere Tiere Futter aus dem Trog 27 herauswerfen. Zu diesem Zweck ist neben der Futterrinne 27 ein sich horizontal erstreckendes, ebenfalls durchgehendes Futterfangblech 72 angeordnet, wie es in Fig. 19 schematisch dargestellt ist. Dieses Futterfangblech 72 ist selbstverständlich auch für die vorangehend beschriebene Ausführungsform geeignet und gedacht. Der dem Futtertrog 27 abgewandte Längsrand des Futterfangblechs 72 ist mit einem elastisch nachgiebigen Polsterstreifen 73 versehen entsprechend dem Hohlkörperprofil 40 für die Tragprofile 38. Das Futterfangblech 72 wird als Futterrinne für Kleinsttiere verwendet. Für größer gewordene Tiere dient das Futterfangblech zum Auffangen von aus dem Trog 27 herausgeworfenem Futter. Dadurch lassen sich Futtermittelverluste erheblich reduzieren. Das Futterfangblech 72 erstreckt sich entsprechend Fig. 19 bis zum Tragboden 21 bzw. zur Netzbahn 10.

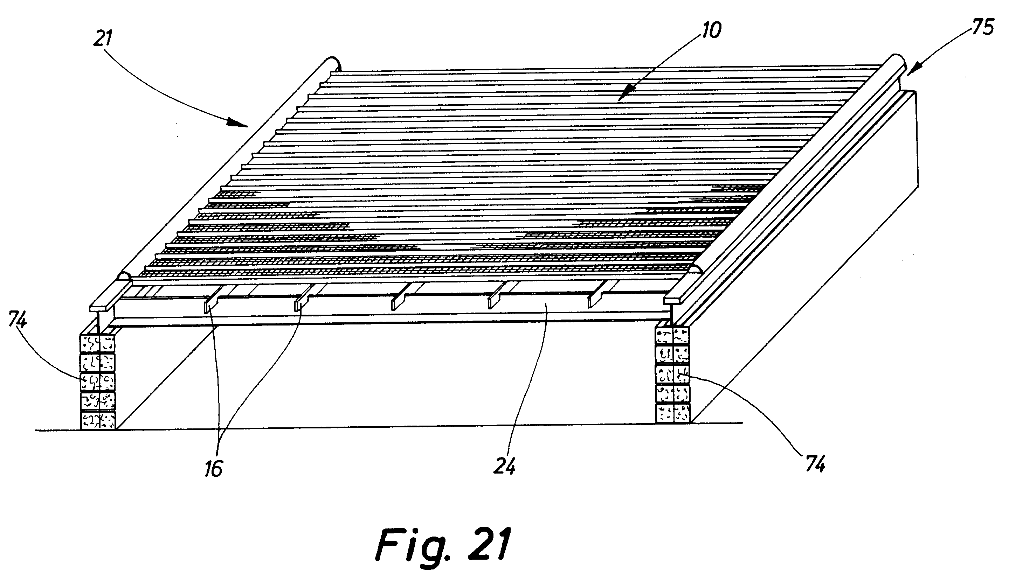

Anhand der Figuren 21 bis 24 wird eine Ausführungsform mit stationärem Tragboden 21 beschrieben, der ebenfalls durch eine durchgehende Netzbahn 10 der beschriebenen Art definiert ist. Diese Ausführungsform ist für die Aufzucht von Tieren geeignet, die über eine längere Zeit im Stall bleiben, z. B. Hähnchen und Hennen oder Enten. Dafür ist der Aufwand eines beweglichen Tragbodens nicht erforderlich.

Dementsprechend wird bei der zuletzt genannten Ausführungsform ein Rechteckrahmen 75 auf im Abstand voneinander angeordneten, sich parallel zueinander erstreckenden Mauersockeln 74 positioniert. Der Rahmen 75 dient als Untergestell für den Tragboden 21. Dieser kann ähnlich groß dimensioniert sein wie bei den vorangehenden Ausführungsformen. Des weiteren ist die Grundkonstruktion Netz 10/Tragprofile 38 und Hohlkörperprofile 40 in der gleichen Weise ausgeführt wie bei den Ausführungsformen nach den Fig. 1 bis 20.

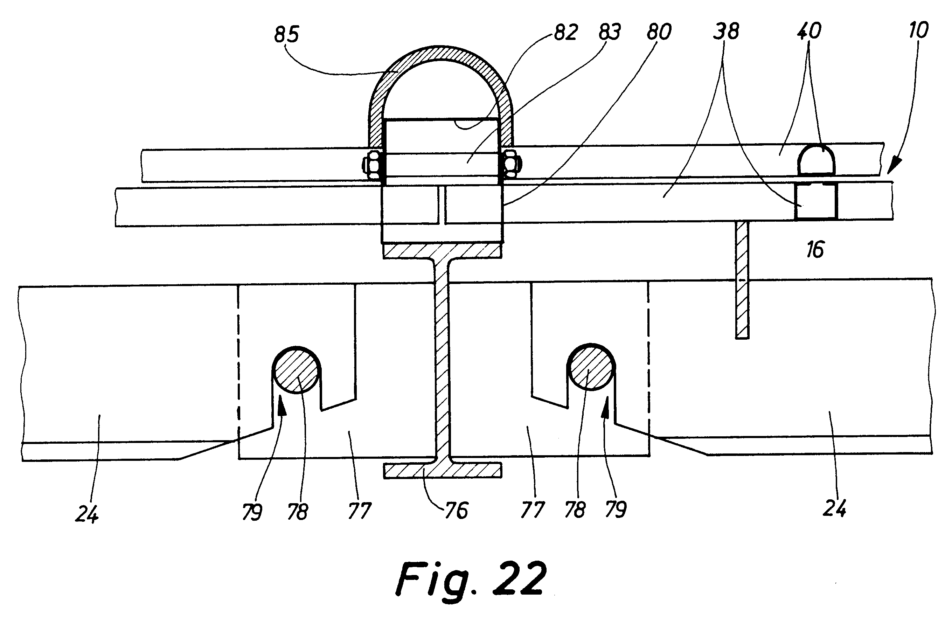

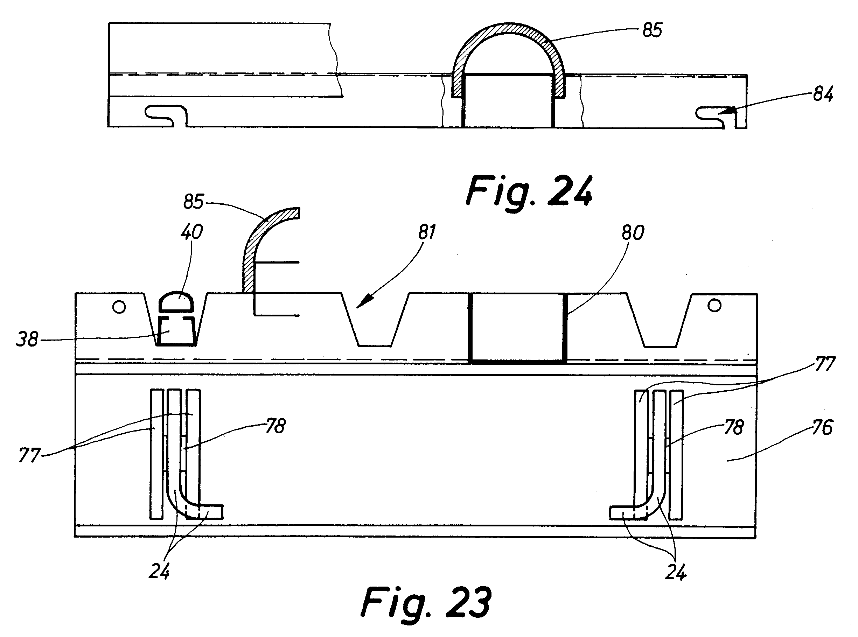

Der Rahmen 75 ist durch Doppel-T-Profile 76 definiert, die auf den Mauersockeln 74 aufliegen und die durch im Abstand voneinander angeordnete Querträger 24 miteinander verbunden sind. Die Querträger 24 sind also L-Profile ausgebildet. Der Abstand dieser Profile voneinander beträgt etwa 2,5 bis 3,5 m, vorzugsweise etwa 3,0 m. Entsprechend Fig. 22 und 23 sind an den Stegen, insbesondere an den einander zugekehrten Seiten der Stege der Doppel-T-Profile 76 im genannten Abstand voneinander jeweils Doppellaschen 77 angeschweißt, zwischen denen der aufrechte Schenkel der Querträger 24 einpaßbar ist. Die Doppellaschen 77 sind jeweils von einem quergerichteten Tragbolzen 78 durchsetzt, an dem die Querträger 24 eingehängt sind. Zu diesem Zweck weisen die Querträger 74 an ihren querschenkelfreien Enden jeweils nach unten offene Ausnehmungen 79 entsprechend Fig. 22 auf. Bei fester Montage der Doppel-T-Profile 76 auf den Mauersockeln 74 lassen sich somit die Querträger 24 um die Tragbolzen 78 nach oben verschwenken bzw. klappen. Vorher muß natürlich der netzartige Tragboden 21 entfernt, d. h. aufgerollt werden. Auf diese Weise ist der Stallboden zwischen benachbarten Mauersockeln 74 zum Säubern frei zugänglich. Bei Anordnung eines mittleren Mauersockels 74 werden zum Zwecke der Säuberung die diesem zugeordneten Tragkonstruktionen jeweils an dem diesem Mauersockel zugeordneten Doppel-T-Profil 76 hochgeklappt und in der hochgeklappten Stellung miteinander verbunden und gehalten. Auf diese Weise ist eine Reinigung des Stallbodens zu beiden Seiten des mittleren Mauersockels gleichzeitig möglich.

Wie bereits oben dargelegt, ist der Tragboden 21 entsprechend aufgebaut wie bei den vorangehend beschriebenen Ausführungsformen, d. h. mit Tragprofilen 38, Netzbahn 10 und den Tragprofilen 38 zugeordneten Polster- bzw. Hohlkörperprofilen 40. Entsprechend Fig. 22 sind den stirnseitigen Enden der Tragprofile 38 keine Hohlkörperprofile 40 mehr zugeordnet. Die von diesen Hohlkörperprofilen 40 befreiten Enden der Tragprofile 38 finden Aufnahme in zugeordneten Halteprofilen 80, die jeweils an der Oberseite der Doppel-T-Profile 76 befestigt sind. Diese Halteprofile 80 sind jeweils durch ein U-Profil definiert, welches im Abstand voneinander sich jeweils nach unten verjüngende Ausnehmungen 81 zur Aufnahme der stirnseitigen Enden der Tragprofile 38 aufweist. Der Abstand der Ausnehmungen 81 ist dementsprechend dem Abstand der Tragprofile 38.

Die Halteprofile 80 sind beim Gebrauch oben abgedeckt durch ein ebenfalls U-förmiges Deckprofil 82, welches mit den nach unten gerichteten Schenkeln aufgrund entsprechender Abmessung in das nach oben offene Halteprofil 80 eintritt. In Abständen voneinander sind quergerichtete Bolzen 83 in dem Halteprofil 80 vorgesehen. Diese ermöglichen eine Verbindung des Abdeckprofils 82 mit dem Halteprofil 80 nach Art einer Bajonettverbindung 84 (s. Fig. 24).

Die Oberseite des Abdeckprofils 82 ist mit einer elastischen Hohlkörperabdeckung 85 versehen, die Verletzungen der Tiere durch das Abdeckprofil 82 vermeiden soll.

Wie bereits ausgeführt, wird zum Reinigen der Stallung zunächst das Abdeckprofil 82 abgehoben nach entsprechendem Lösen der erwähnten Bajonettverbindung 84. Anschließend wird die Netzbahn samt Tragprofilen 38 entfernt, z. B. aufgerollt. Dieses Aufrollen wird durch die trapezförmigen Ausnehmungen 81 entsprechend Fig. 23 erleichtert. Anschließend können - wie oben beschrieben - die Querträger 24 um die Tragbolzen 78 nach oben geklappt werden. Der Stallboden liegt dann frei zur Reinigung. Die Netzbahn 10 wird vorzugsweise außerhalb der Stallung gereinigt. Anschließend wird der Tragboden 21 wieder zusammengesetzt, und zwar in umgekehrter Reihenfolge. Die beschriebenen Ausnehmungen 81 befinden sich jeweils in den aufrechten Schenkeln des U-förmigen Halteprofils 80. Die Tragprofile 38 werden innerhalb der Ausnehmungen 81 durch das obere Abdeckprofil 82 gehalten.

## Patentansprüche

1. Einrichtung für die Haltung von Kleintieren, insbesondere Mastgeflügel wie Hähnchen, in einer Stallung mit einem durchgehenden, als Förderer ausgebildeten, gitterartigen Kunststoff-Tragboden (21) aus Längsfäden (70) und Querfäden (71) eines dünnfädigen Netzes (10), das auf quer zur Förderrichtung desselben angeordneten, mit seitlichen Förderorganen (51) verbundenen Tragprofilen (38) aufliegt, wobei das Netz (10) durch elastische Organe mit den Tragprofilen (38) verbunden ist, **dadurch gekennzeichnet,** daß das elastische Organ zum Verbinden des Netzes (10) mit dem Tragprofil (38) als streifenförmiges, elastisch nachgiebiges Polsterprofil (40) ausgebildet ist, das sich in Längsrichtung des Tragprofils (38) oberhalb desselben erstreckt und mit sich ebenfalls in Längsrichtung des Polsterprofils (40) erstreckenden Verankerungsabschnitten (25, 49) im oben offenen Tragprofil (38) verankert ist, wobei die Verankerungsabschnitte (25, 49) im Bereich von Längsfäden (70) des Netzes (10) Ausnehmungen (69) für den Durchtritt der Längsfäden (70) aufweisen.

2. Einrichtung nach Anspruch 1, dadurch gekennzeichnet, daß die Tragprofile (38) als nach oben offene U-Profile aus Kunststoff, Metall, vorzugsweise Edelstahl oder dergleichen ausgebildet sind, wobei zwischen Schenkeln (36, 37) der Tragprofile (38) die Verankerungsabschnitte (25, 49) der Polsterprofile (40) verankert sind.

3. Einrichtung nach Anspruch 1 oder 2, dadurch gekennzeichnet, daß die Tragprofile (38) als C-förmige Profile ausgebildet sind, mit denen die Polsterprofile (40) durch angeformte Verankerungsabschnitte (49) formschlüssig verankert sind.

4. Einrichtung nach Anspruch 3, dadurch gekennzeichnet, daß die Verankerungsabschnitte (49) Stützlippen (66) aufweisen, die innenseitig an den beiden Schenkeln des Tragprofils (38) mit klemmender Wirkung anliegen.

5. Einrichtung nach Anspruch 1 oder 2, dadurch gekennzeichnet, daß die Polsterprofile (40) mit ihren Verankerungsabschnitten (25) mittels Einbettmasse (Klebemasse) in den Tragprofilen (38) verankert sind.

6. Einrichtung nach Anspruch 2, dadurch gekennzeichnet, daß sich Schenkel (36, 37) der U-förmigen Tragprofile (38) bis in die Ebene des Netzes (10) erstrecken und Einschnitte (15) für den Durchtritt von Längsfäden (70) des Netzes (10) aufweisen.

7. Einrichtung nach Anspruch 2, dadurch gekennzeichnet, daß die Schenkel (36, 37) der U-förmigen Tragprofile (38) mit nach innen geformten Vorsprüngen (53) versehen sind zur formschlüssigen Verankerung der Verankerungsabschnitte (49).

8. Einrichtung nach einem oder mehreren der Ansprüche 1 bis 7, dadurch gekennzeichnet, daß die seitlichen Förderorgane endlose Gliederketten (51) sind, an deren aufrechten Kettengliedern die Tragprofile (38) befestigt sind.

9. Einrichtung nach einem oder mehreren der Ansprüche 1 bis 8, dadurch gekennzeichnet, daß die als Gliederketten (51) ausgebildeten Förderorgane in entsprechend ausgebildeten Führungsprofilen, insbesondere U-Profilen (64) mit einander zugekehrten Führungsrillen (86) für die sich aufrecht erstreckenden Kettenglieder oder Doppelwinkelprofilen (20, 30) zur Abstützung sowohl der aufrechten als auch der sich quer dazu erstreckenden Kettenglieder, geführt sind, wobei zumindest den Obertrums der Gliederketten (51) derartige Führungsprofile (30) zugeordnet sind.

10. Einrichtung nach einem oder mehreren der Ansprüche 1 bis 9, dadurch gekennzeichnet, daß das Tragbodennetz bzw. die Netzbahn (10) samt Tragprofilen (38) tragbodenendseitig über vorzugsweise an den seitlichen Traggerüsten (17) gelagerte Umlenktrommeln (14) geführt ist, die stirnseitig jeweils ein Kettenrad (42) zur Umlenkung der dem Tragbodennetz bzw. der Netzbahn (10) zugeordneten Gliederketten (51) aufweisen und von denen mindestens eine an einen motorischen Antrieb ankopppelbar ist.

11. Einrichtung nach Anspruch 10 mit mindestens zwei nebeneinander angeordneten Tragbodennetzen bzw. Netzbahnen (10) unter Ausbildung eines entsprechend vergrößerten Tragbodens (21), dadurch gekennzeichnet, daß die am gleichen Ende des Tragbodens (21) angeordneten Umlenktrommeln (14) benachbarter Tragbodennetze bzw. Netzbahnen (10) koaxial zueinander angeordnet und an ihren einander zugewandten Seiten über ein gemeinsames Drehlager (50) abgestützt sind, welches vorzugsweise an dem beiden Netzbahnen gemeinsamen Traggerüst (17) ausgebildet ist.

12. Einrichtung nach Anspruch 11, dadurch gekennzeichnet, daß das gemeinsame Drehlager (50) durch einen die benachbarten Umlenktrommeln (14) drehfest miteinander verbindenden Lagerbolzen (45) und einen diesem zugeordneten, am gemeinsamen Traggerüst (17) abgestützten vorzugsweise teilbaren Lagerkörper (52) gebildet ist.

13. Einrichtung nach einem der Ansprüche 10 bis 12, dadurch gekennzeichnet, daß das Tragbodennetz bzw. die Netzbahn (10) in Förderrichtung spannbar ist durch entsprechende Verstellung wenigstens einer der Umlenktrommeln (14) bzw. deren Drehlager (50) in Richtung parallel zur Förderrichtung, wobei nebeneinander angeordnete Umlenktrommeln (14) vorzugsweise unabhängig voneinander verstellbar sind.

14. Einrichtung für die Haltung von Kleintieren, insbesondere Mastgeflügel wie Hähnchen, in einer Stallung mit einem durchgehenden, gitterartigen Tragboden (21) aus kunststoff, der durch im Abstand voneinander angeordneten und sich jeweils parallel zueinander erstreckenden Tragprofilen (38) unterstützt ist und aus einer durchgehenden Bahn eines verhältnismäßig dünnfädigen Netzes (10) gebildet ist, welches durch elastische Organe mit den Tragprofilen (38) verbunden ist und mit den Tragprofilen (38) auf einem Untergestell bzw. Rahmen (75) liegt und bei Bedarf aufrollbar ist, dadurch gekennzeichnet, daß der Rahmen (75) durch einzelne Rahmenabschnitte gebildet ist, die bei Bedarf nach vorheriger Entfernung des Tragbodens (21) längs einer Rahmenseite hochklappbar sind und daß an der Oberseite des Tragbodens jeweils obenhalb der Tragprofile (38) weiche, elastisch nachgiebige Polster angeordnet sind, insbesondere in Form von rohr- bzw. schlauch förmigen Hohlkörpern bzw.- profilen (40).

## Claims

1. Apparatus for the keeping of small animals, especially fattening poultry, such as chicken, in a stall with a continuous grid-like plastic supporting floor (21) which is designed as a conveyor and which comprises longitudinal filaments (70) and transverse filaments (71) of a thin-filament net (10) which rests on supporting sections (38) arranged transversely relative to the conveying direction of the latter and connected to lateral conveying members (51), elastic members connecting the net (10) to the supporting sections (38), characterised in that the elastic member for connecting the net (10) to the supporting section (38) is designed as a strip-shaped elastically pliant cushion section (40) which extends in the longitudinal direction of the supporting section (38) above the latter and is anchored in the upwardly open supporting section (38) by means of anchoring portions (25, 49) likewise extending in the longitudinal direction of the cushion section (40), the anchoring portions (25, 49) having cutouts (69) in the region of longitudinal filaments (70) of the net (10) for the passage of the longitudinal filaments (70).

2. Apparatus according to Claim 1, characterised in that the supporting sections (38) are designed as upwardly open U-sections made of plastic, metal, preferably fine steel, or the like, the anchoring portions (25, 49) of the cushion sections (40) being anchored between legs (36, 37) of the supporting sections (38).

3. Apparatus according to Claim 1 or 2, characterised in that the supporting sections (38) are designed as C-shaped sections to which the cushion sections (40) are positively anchored by integrally formed anchoring portions (49).

4. Apparatus according to Claim 3, characterised in that the anchoring portions (49) have support lips (66) which bear internally on the two legs of the supporting section (38), with a clamping action.

5. Apparatus according to Claim 1 or 2, characterised in that the cushion sections (40) are anchored by their anchoring portions (25) in the supporting sections (38) by means of embedding compound (adhesive compound).

6. Apparatus according to Claim 2, characterised in that legs (36, 37) of the U-shaped supporting sections (38) extend into the plane of the net (10) and have notches (15) for the passage of longitudinal filaments (70) of the net (10).

7. Apparatus according to Claim 2, characterised in that the legs (36, 37) of the U-shaped supporting sections (38) are provided with inwardly formed projections (53) for the positive anchoring of the anchoring portions (49).

8. Apparatus according to one or more of Claims 1 to 7, characterised in that the lateral conveying members are endless link chains (51), to the vertical chain links of which the supporting sections (38) are fastened.

9. Apparatus according to one or more of Claims 1 to 8, characterised in that the conveying members designed as link chains (51) are guided in correspondingly designed guide sections, especially U-sections (64) with mutually facing guide grooves (86) for the vertically extending chain links or double-angle sections (20, 30), for supporting both the vertical chain links and the chain links extending transversely thereto, such guide sections (30) being assigned at least to the upper run of the link chains (51).

10. Apparatus according to one or more of Claims 1 to 9, characterised in that the supporting-floor net or the net web (10), together with the supporting sections (38), is guided, at the end of the supporting floor, via deflecting drums (14) which are preferably mounted on the lateral supporting structures (17) and which each have, on the end face, a chain wheel (42) for deflecting the link chains (51) assigned to the supporting-floor net or the net web (10), and at least one of which can be coupled to a motor drive.

11. Apparatus according to Claim 10, with at least two supporting-floor nets or net webs (10) arranged next to one another to form a correspondingly enlarged supporting floor (21), characterised in that the deflecting drums (14) arranged at the same end of the supporting floor (21) and belonging to adjacent supporting-floor nets or net webs (10) are arranged coaxially relative to one another and, on their sides facing one another, are supported via a common pivot bearing (50) which is preferably formed on the supporting structure (17) common to the two net webs.

12. Apparatus according to Claim 11, characterised in that the common pivot bearing (50) is formed by a bearing bolt (45) connecting the adjacent deflecting drums (14) fixedly to one another in terms of rotation and by a bearing body (52), preferably separable, assigned to this bearing bolt (45) and supported on the common supporting structure (17).

13. Apparatus according to one of Claims 10 to 12, characterised in that the supporting-floor net or the net web (10) can be tensioned in the conveying direction as a result of the appropriate adjustment of at least one of the deflecting drums (14) or of their pivot bearings (50) in a direction parallel to the conveying direction, deflecting drums (14) arranged next to one another preferably being adjustable independently of each other.

14. Apparatus for the keeping of small animals, especially fattening poultry, such as chickens, in a stall, with a continuous grid-like plastic supporting floor (21) which is underpinned by supporting sections (38) arranged at a distance from one another and extending respectively parallel to one another and is formed from a continuous web of a relatively thin-filament net (10) which is connected to the supporting sections (38) by elastic members and which rests by the supporting sections (38) upon a substructure or frame (75) and, if required, can be rolled up, characterised in that the frame (75) is formed from individual frame portions which, if required, can be swung up along one side of the frame after the previous removal of the supporting floor (21), and in that soft, elastically pliant cushions, especially in the form of tubular or hose-shaped hollow bodies or hollow sections (40), are arranged on the top side of the supporting floor, in each case above the supporting sections (38).

## Revendications

1. Dispositif pour l'élevage de petits animaux, en particulier de volaille engraissée comme des poulets, dans un bâtiment comportant un plancher porteur en matière synthétique (21), continu, en un genre de grille, réalisé sous la forme d'un convoyeur, et constitué de fils longitudinaux (70) et de fils transversaux (71) d'un filet (10) à fins fils qui repose sur des profilés porteurs (38) agencés transversalement à la direction de transport du filet et reliés à des organes latéraux de transport (51), le filet (10) étant relié par des organes élastiques aux profilés porteurs (38), caractérisé en ce que l'organe élastique pour la liaison du filet (10) au profilé porteur (38) est réalisé sous la forme d'un profilé d'amortissement (40) en forme de bande, élastiquement flexible, qui s'étend dans la direction longitudinale du profilé porteur (38) audessus de celui-ci et qui est ancré dans le profilé porteur (38), ouvert au-dessus, par des tronçons d'ancrage (25, 49) qui s'étendent aussi dans la direction longitudinale du profilé d'amortissement (40), les tronçons d'ancrage (25, 49) présentant dans la zone de fils longitudinaux (70) du filet (10) des évidements (69) pour le passage des fils longitudinaux (70).

2. Dispositif suivant la revendication 1, caractérisé en ce que les profilés porteurs (38) sont réalisés sous la forme de profilés en U ouverts vers le haut, en matière synthétique, en métal, de préférence en acier allié, etc., les tronçons d'ancrage (25, 49) des profilés d'amortissement (40) étant ancrés entre des ailes (36, 37) des profilés porteur (38).

3. Dispositif suivant la revendication 1 ou 2, caractérisé en ce que les profilés porteurs (38) sont réalisés sous la forme de profilés en forme de C avec lesquels les profilés d'amortissement (40) sont ancrés, pour réaliser une liaison par la forme, par l'intermédiaire de tronçons d'ancrage (49) façonnés.

4. Dispositif suivant la revendication 3, caractérisé en ce que les tronçons d'ancrage (49) présentent des lèvres d'appui (66) qui sont appuyées du côté interne, avec une action de serrage, sur les deux ailes du profilé porteur (38).

5. Dispositif suivant la revendication 1 ou 2, caractérisé en ce que les profilés d'amortissement (40) sont ancrés par leurs tronçons d'ancrage (25) dans les profilés porteurs (38) au moyen de masses d'enrobage (masses adhésives).

6. Dispositif suivant la revendication 2, caractérisé en ce que des ailes (36, 37) des profilés porteurs (38) en forme de U s'étendent jusque dans le plan du filet (10) et présentent des découpes (15) pour le passage de fils longitudinaux (70) du filet (10).

7. Dispositif suivant la revendication 2, caractérisé en ce que les ailes (36, 37) des profilés porteurs (38) en forme de U sont munies de saillies (53), façonnées vers l'intérieur, pour l'ancrage des tronçons d'ancrage (49) par une liaison par la forme.

8. Dispositif suivant une ou plusieurs des revendications 1 à 7, caractérisé en ce que les organes latéraux de transport sont des chaînes sans fin (51) à maillons dont les maillons dressés sont fixés aux profilés porteurs (38).

9. Dispositif suivant une ou plusieurs des revendications 1 à 8, caractérisé en ce que les organes de transport réalisés sous la forme de chaînes à maillons (51) sont guidés dans des profilés de guidage réalisés de façon correspondante, en particulier des profilés en U (64) comportant des rainures de guidage (86), tournées l'une vers l'autre, pour les maillons de chaîne qui s'étendent verticalement, ou des profilés à double cornière (20, 30) pour le soutien tant des maillons de chaîne verticaux qu'aussi de ceux qui s'étendent transversalement à cela, des profilés de guidage (30) de ce genre étant adjoints au moins au brin supérieur des chaînes à maillons (51).

10. Dispositif suivant une ou plusieurs des revendications 1 à 9, caractérisé en ce que le filet de plancher porteur ou la bande de filet (10) y compris les profilés porteurs (38) sont guidés du côté des extrémités du plancher porteur par des tambours de renvoi (14) qui sont montés de préférence sur les supports latéraux (17) et qui présentent du côté frontal chaque fois une roue à chaîne (42) pour le renvoi des chaînes à maillons (51) adjointes au filet de plancher porteur ou à la bande de filet (10) et en ce que, de ces chaînes, au moins une peut être accouplée à un entraînement motorisé.

11. Dispositif suivant la revendication 10, comportant au moins deux filets de plancher porteur, ou bandes de filet (10), agencés l'un près de l'autre, en réalisant un plancher porteur (21) agrandi de façon correspondante, caractérisé en ce que les tambours de renvoi (14), agencés à la même extrémité du plancher porteur (21), pour des filets de plancher porteur ou bien des bandes de filet (10) contigus sont agencés coaxialement l'un à l'autre et sont soutenus sur leurs côtés tournés l'un vers l'autre par un palier commun qui est réalisé de préférence sur le support (17) commun aux deux bandes de filet.

12. Dispositif suivant la revendication 11, caractérisé en ce que le palier commun (50) est formé par un tourillon de palier (45), qui relie l'un à l'autre rigidement en torsion les tambours de renvoi contigus (14), et par un corps de palier (52), de préférence divisible, adjoint à ce tourillon et supporté par le support commun (17).

13. Dispositif suivant l'une des revendications 10 à 12, caractérisé en ce que le filet de plancher porteur ou la bande de filet (10) peut être tendu dans la direction de transport par un réglage correspondant d'au moins un des tambours de renvoi (14) ou de son palier (50) dans une direction parallèle à la direction de transport, des tambours de renvoi (14) agencés l'un à côté de l'autre pouvant être de préférence réglés indépendamment l'un de l'autre.

14. Dispositif pour l'élevage de petits animaux, en particulier de volaille engraissée comme des poulets, dans un bâtiment comportant un plancher porteur (21) continu, en un genre de grille, en matière synthétique, qui est soutenu par des profilés porteurs (38) agencés à distance l'un de l'autre et s'étendant chaque fois parallèlement l'un à l'autre et qui est formé par une bande continue d'un filet (10) à fils relativement fins relié par des organes élastiques aux profilés porteurs (38) et posé sur un socle ou cadre (75) et enroulable au besoin, caractérisé en ce que le cadre (75) est formé par des tronçons de cadre qui au besoin peuvent être rabattus vers le haut le long d'un côté du cadre après une suppression préalable du plancher porteur (21) et en ce que sur le côté supérieur du plancher porteur sont chaque fois agencés au-dessus des profilés porteurs (38) des coussins mous, élastiquement flexibles, en particulier en forme de corps creux ou profilés creux (40) qui ont une forme de tube ou de boyau.
